# EUROPEAN PATENT APPLICATION

(11) **EP 4 765 379 A1**
(43) Date of publication of application: **24.06.2026**
(21) Application number: 24886248.4
(22) Date of filing: 30.10.2024
(51) Int. Cl.: H01M 50/148, H01M 50/105, H01M 50/186

(54) **SECONDARY BATTERY**

(30) Priority: 30.10.2023 KR 20230147154; 29.10.2024 KR 20240149724
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); YU, Hyung Kyun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/016805
(87) International publication number: WO 2025/095575

(57) **Abstract**

The present disclosure relates to a secondary battery that can be charged and discharged, and may include an electrode assembly; a pouch-type exterior material having an internal space that accommodates the electrode assembly and an exterior material opening that allows the internal space to communicate with the outside; and a cover member inserted into the exterior material opening, wherein the cover member may include a body portion blocking the exterior material opening; and a leg portion extending from the body portion toward the internal space.

## Description

### TECHNICAL FIELD

### CROSS-REFERENCE TO RELATED APPLICATIONS

The present application claims priority to Korean Patent Application No. 10-2023-0147154 filed on October 30, 2023 and Korean Patent Application No. 10-2024-0149724 filed on October 29, 2024 in the Republic of Korea, the disclosures of which are incorporated herein by reference.

### TECHNICAL FIELD

The present disclosure relates to a secondary battery that can be charged and discharged.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

Such a secondary battery may be classified in various ways depending on the type of exterior material that accommodates an electrode assembly. For example, the secondary battery may be classified into a prismatic secondary battery in which an electrode assembly is accommodated inside a prismatic metal can, a cylindrical secondary battery in which an electrode assembly is accommodated inside a cylindrical metal can, and a pouch-type secondary battery in which an electrode assembly is accommodated inside a pouch composed of a laminate sheet.

Meanwhile, a pouch-type secondary battery may be manufactured by means of accommodating an electrode assembly in a cup portion within a pouch and then sealing the pouch, and the molding depth of such a cup portion was limited due to the material properties of the pouch, so that there was a problem of being unable to mold the cup portion deep enough to increase the capacity of the secondary battery.

To solve this problem, there has been an attempt to manufacture a pouch-type secondary battery by seating the electrode assembly in a pouch-type exterior material, folding or rolling the exterior material to form an internal space for accommodating the electrode assembly, inserting a cover member into an open area communicating with the internal space, and then sealing the exterior material and the cover member.

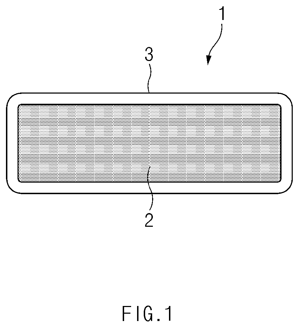

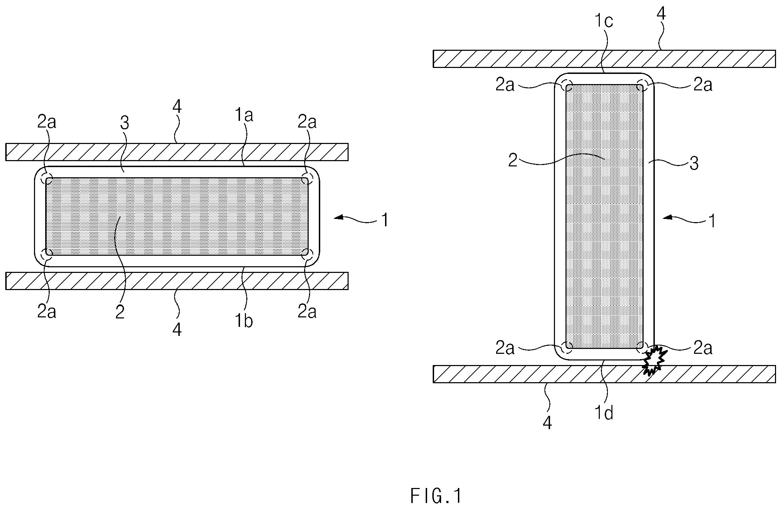

FIG. 1 is a view showing an example of such a pouch-type secondary battery, and FIG. 1 is a view schematically showing such a pouch-type secondary battery as viewed from the front. The pouch-type secondary battery 1 includes a pouch-type exterior material 3 that accommodates an electrode assembly therein, and a cover member 2 that is inserted into an open area of the exterior material 3 and is coupled to an inner surface of the exterior material 3 to seal the internal space of the exterior material 3. The exterior material 3 is composed of a metal layer and a resin layer formed on both surfaces of the metal layer, and the cover member 2 may be thermally fused with an inner resin layer formed on the inner surface of the exterior material 3 to seal the internal space of the exterior material 3.

Meanwhile, FIG. 2 is a view showing an example of a sealing system for sealing the pouch-type secondary battery of FIG. 1. To thermally fuse the exterior material 3 and the cover member 2, a process of pressing the cover member 2 and the exterior material 3 with a high-temperature sealing block 4 should be performed. Specifically, when the high-temperature sealing block 4 presses the upper surface 1a and the lower surface 1b of the secondary battery 1, the exterior material 3 may be thermally fused to the upper surface and the lower surface of the cover member 2, respectively. Additionally, when the high-temperature sealing block 4 presses the left and right side surfaces 1c, 1d of the secondary battery 1, the exterior material 3 may be thermally fused to the left and right side surfaces of the cover member 2, respectively.

However, when the cover member 2 and the exterior material 3 are thermally fused in this manner, the heat and pressure by the sealing block 4 are not effectively transmitted to the corner portion 2a of the cover member 2, and thus the coupling performance between the corner portion 2a and the exterior material 3 is degraded, resulting in a problem that the internal space of the exterior material 3 is not sealed.

### SUMMARY

### TECHNICAL PROBLEM

The present disclosure is designed to solve the problems of the related art, and therefore the present disclosure is directed to providing a secondary battery capable of effectively sealing an internal space of an exterior material by improving coupling performance of a cover member and the exterior material.

### TECHNICAL SOLUTION

A secondary battery according to Embodiment 1 of the present disclosure may include an electrode assembly; a pouch-type exterior material having an internal space that accommodates the electrode assembly and an exterior material opening that allows the internal space to communicate with the outside; and a cover member inserted into the exterior material opening, wherein the cover member may include a body portion blocking the exterior material opening; and a leg portion extending from the body portion toward the internal space, wherein the body portion and the leg portion may be coupled to an inner surface of the exterior material to seal the internal space.

The leg portion may extend from a corner of the body portion toward the internal space.

The exterior material may be formed by rolling or folding an exterior material sheet so that one end and the other end of the exterior material sheet including a metal layer and a resin layer formed on both surfaces of the metal layer meet each other.

The one end and the other end of the exterior material sheet may be bonded or fused to each other.

The body portion and the leg portion may be coupled to the inner surface of the exterior material by adhesion or fusion.

The leg portion may extend from the body portion to the electrode assembly.

The body portion may have a cuboid box shape, and the leg portion may have a cuboid rod shape.

The leg portion may be formed at each of four corners of the body portion.

A through hole into which an electrode lead electrically connected to the electrode assembly is inserted may be formed in the cover member.

An electrolyte injection port for injecting an electrolyte into the internal space of the exterior material in which the electrode assembly is accommodated may be formed in the cover member.

Meanwhile, a secondary battery according to Embodiment 2 of the present disclosure may include a reinforcing member interposed between the body portion and the leg portion to support the leg portion.

The reinforcing member may be spaced apart from the electrode assembly and an electrode tab connected to the electrode assembly by a predetermined distance.

The reinforcing member may be coupled to the body portion and the leg portion by adhesion or fusion.

The reinforcing member may be installed at an edge formed by the body portion and the leg portion.

Meanwhile, in a secondary battery according to Embodiment 3 of the present disclosure, the leg portion may include a first part located close to the corner of the body portion and having a relatively thick thickness; and a second part extending from the first part toward the internal space and having a relatively thin thickness.

A convexly protruding streamlined protrusion may be formed in the first part.

A concavely dug streamlined curved portion may be formed in the second part.

### ADVANTAGEOUS EFFECTS

A secondary battery according to Embodiment 1 of the present disclosure includes a cover member having a body portion and a leg portion installed on the body portion, so that the coupling performance of a pouch-type exterior material and the cover member may be improved, thereby effectively sealing the internal space of the exterior material.

A secondary battery according to Embodiment 2 of the present disclosure includes a reinforcing member interposed between the body portion and the leg portion, so that the leg portion may be prevented from being broken by an external force acting on the leg portion during sealing the secondary battery.

### BRIEF DESCRIPTION OF THE DRAWINGS

FIG. 1 is a view showing an example of a pouch-type secondary battery.
FIG. 2 is a view showing an example of a sealing system for sealing the pouch-type secondary battery of FIG. 1.
FIG. 3 is a perspective view of a secondary battery according to Embodiment 1 of the present disclosure.
FIG. 4 is an exploded perspective view of a secondary battery according to Embodiment 1 of the present disclosure.
FIG. 5 is a cross-sectional view taken along the AA' direction of FIG. 3.
FIG. 6 is an enlarged view of part A of FIG. 5.
FIG. 7 is a view for describing a length relationship between an electrode tab and a leg portion in a secondary battery according to Embodiment 1 of the present disclosure.
FIG. 8 is a perspective view of a secondary battery according to Embodiment 2 of the present disclosure.
FIG. 9 is a cross-sectional view taken along the BB' direction of FIG. 8.
FIG. 10 is a view showing a state in which a reinforcing member is installed between a body portion and a leg portion in a secondary battery according to Embodiment 2 of the present disclosure.
FIG. 11 is a view showing a state in which a reinforcing member is installed at each of parts between a body portion and a leg portion in a secondary battery according to Embodiment 2 of the present disclosure.
FIG. 12 is a cross-sectional view for describing a leg portion structure in a secondary battery according to Embodiment 3 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery according to the present disclosure will be described with reference to the drawings.

### Embodiment 1

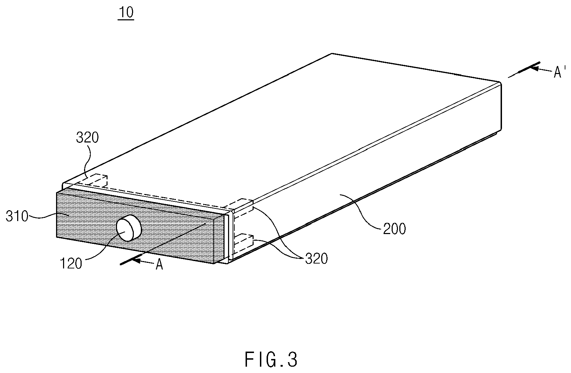

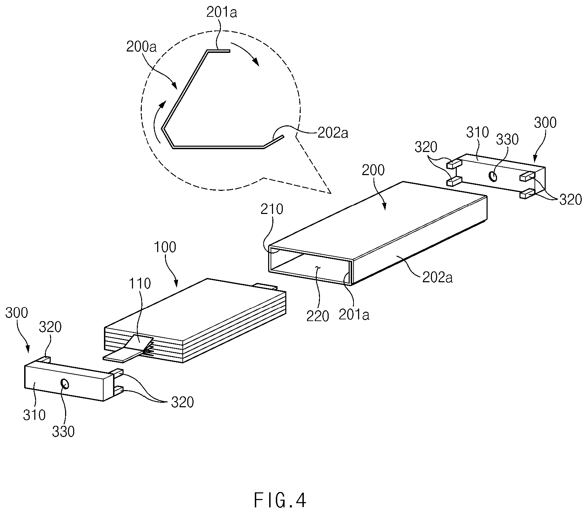

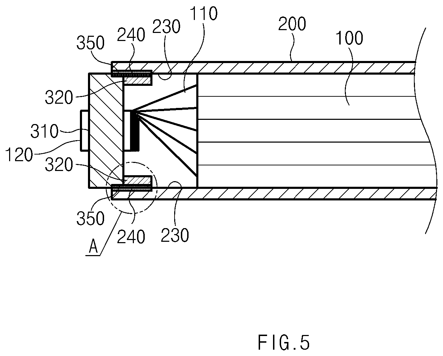

FIG. 3 is a perspective view of a secondary battery 10 according to Embodiment 1 of the present disclosure, and FIG. 4 is an exploded perspective view of a secondary battery 10 according to Embodiment 1 of the present disclosure. FIG. 5 is a cross-sectional view taken along the AA' direction of FIG. 3.

Referring to FIGS. 3 to 5, a secondary battery 10 according to Embodiment 1 of the present disclosure may include an electrode assembly 100; a pouch-type exterior material 200 having an internal space 220 that accommodates the electrode assembly 100 and an exterior material opening 210 that allows the internal space 220 to communicate with the outside; and a cover member 300 inserted into the exterior material opening 210. The cover member 300 may include a body portion 310 blocking the exterior material opening 210; and a leg portion 320 extending from the body portion 310 toward the internal space 220, wherein the body portion 310 and the leg portion 320 are coupled to an inner surface 230 of the exterior material 200 to seal the internal space 220.

The electrode assembly 100 is a stack including a positive electrode, a negative electrode and a separator, and may have various structures. For example, the electrode assembly may be a stack type electrode assembly in which a positive electrode, a negative electrode and a separator are stacked in one direction, or a stack-folding type electrode assembly in which a positive electrode, a negative electrode and a separator are stacked in one direction and then folded.

Here, the positive electrode may include a positive electrode current collector and a positive electrode active material coated on the positive electrode current collector, and the negative electrode may include a negative electrode current collector and a negative electrode active material coated on the negative electrode current collector. The separator is an insulating material membrane interposed between the positive electrode and the negative electrode to block contact between the positive electrode and the negative electrode, and a plurality of pores through which positive ions pass may be formed in the separator.

The exterior material 200 is formed by winding an exterior material sheet 200a in one direction, and the internal space 220 for accommodating the electrode assembly 100 may be formed inside the wound exterior material sheet 200a. Additionally, both sides of the internal space 220 may communicate with the outside.

Specifically, the exterior material sheet 200a is a sheet having one end 201a and the other end 202a spaced apart from the one end 201a in a predetermined direction, and the exterior material 200 may be formed by rolling or folding the exterior material sheet 200a so that the one end 201a and the other end 202a meet. The one end 201a and the other end 202a of the exterior material sheet 200a may be coupled to each other in various ways. For example, the one end 201a and the other end 202a may be bonded with an adhesive, or the one end 201a and the other end 202a may be thermally fused to each other by receiving heat and pressure.

The one end 201a of the exterior material sheet 200a may be coupled to an inner surface or an outer surface of the other end 202a. As shown in FIG. 4, the outer surface of the one end 201a of the exterior material sheet 200a may be coupled to the inner surface of the other end 202a. Additionally, the inner surface of the one end 201a of the exterior material sheet 200a may be coupled to the inner surface of the other end 202a.

Meanwhile, the exterior material sheet 200a may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to a cover member 300 to be described later to seal the internal space 220, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the exterior material 200 of the secondary battery 10 according to Embodiment 1 of the present disclosure is prepared by rolling or folding the exterior material sheet 200a, the electrode assembly 100 may be accommodated in the internal space 220 of the exterior material 200 without molding a separate cup portion. In this case, the conventional limitation due to the formation of the cup portion in the exterior material is not applied, so that the capacity of the secondary battery 10 may be easily increased by increasing the size of the internal space 220. Additionally, the exterior material 200 prepared by rolling or folding the exterior material sheet 200a is not formed with a part that decreases in thickness, and thus the occurrence of defects such as cracks in the exterior material 200 may be prevented.

For reference, the secondary battery 10 according to Embodiment 1 of the present disclosure may be formed by seating the electrode assembly 100 on the upper surface of the exterior material sheet 200a in an unfolded state and then rolling or folding the exterior material sheet 200a. Additionally, the secondary battery 10 according to Embodiment 1 of the present disclosure may be formed by rolling or folding the exterior material sheet 200a to form the internal space 220 and the exterior material opening 210 and then inserting the electrode assembly 100 into the exterior material opening 210. In both of the above cases, the electrode assembly 100 may be accommodated inside the exterior material 200 without molding a separate cup portion.

Meanwhile, the cover member 300 may be a member that is coupled to the exterior material 200 and blocks the exterior material opening 210. The internal space 220 of the exterior material 200 in which the electrode assembly 100 is accommodated may be filled with an electrolyte, and the cover member 300 may seal the internal space 220 to prevent the electrolyte from leaking out of the internal space 220. Specifically, the cover member 300 inserted into the exterior material opening 210 that allows the internal space 220 to communicate with the outside may be coupled to the inner surface 230 of the exterior material 200 to seal the internal space 220. Here, the inner surface 230 of the exterior material 200 may be the second resin layer described above.

The cover member 300 may include a body portion 310 blocking the exterior material opening 210 and a leg portion 320 extending from the body portion 310 toward the internal space 220. At this time, the body portion 310 and the leg portion 320 may be coupled to the inner surface 230 of the exterior material 200 to seal the internal space 220. In this case, the inner surface of the exterior material 200 is coupled to the body portion 310 and the leg portion 320 formed on the body portion 310 to improve the coupling force between the cover member 300 and the exterior material 200, thereby effectively sealing the internal space 220.

In particular, the leg portion 320 may extend from a corner of the body portion 310 toward the internal space 220. At this time, the leg portion 320 may be formed at one or more of the plurality of corners formed in the body portion 310. In this case, the inner surface of the exterior material 200 is coupled to the body portion 310 and the leg portion 320 formed at the corner of the body portion 310, and thus there is an advantageous effect of improving the coupling force between the corner portion of the cover member 300 and the exterior material 200.

Additionally, the cover member 300 may be made of a material that is not easily permeable to moisture in order to be coupled to the inner surface 230 of the exterior material 200 and seal the internal space 220 of the exterior material 200. For example, the body portion 310 and the leg portion 320 constituting the cover member 300 may be obtained from a metal or resin, or may be obtained from a laminate sheet in which a resin layer is formed on both surfaces of a metal layer.

Meanwhile, as shown in FIGS. 3 and 4, the body portion 310 may have a cuboid box shape. In this case, four side surfaces of the body portion 310 inserted into the exterior material opening 210 face the inner surface 230 of the exterior material 200, and all four side surfaces of the body portion 310 are formed as flat planes, so that the four side surfaces of the body portion 310 may be firmly coupled to the inner surface 230 of the exterior material 200, thereby effectively sealing the internal space 220 of the exterior material 200.

At this time, the body portion 310 may be coupled to the inner surface 230 of the exterior material 200 in a thermal fusion manner to seal the internal space 220 of the exterior material 200. Specifically, the body portion 310 and the exterior material 200 may be pressed by a sealing block at a high temperature, or may be thermally fused to each other by simultaneously receiving heat and pressure by the sealing block. Here, the body portion 310 has a cuboid box shape, and thus the sealing block may press each of parts where the four flat surfaces of the body portion 310 and the exterior material 200 meet.

Here, there is no protruding or dug part in each of the four regions where the sealing block presses the exterior material 200 and the body portion 310, and thus the sealing block may transmit uniform pressure to the exterior material 200 and the body portion 310 that it presses. In this case, the inner surface 230 of the exterior material 200 may be uniformly thermally fused to each of the four surfaces of the body portion 310.

Additionally, the body portion 310 may be coupled to the inner surface 230 of the exterior material 200 in an adhesive manner to seal the internal space 220 of the exterior material 200. At this time, the body portion 310 has a cuboid box shape, and thus a flat adhesive layer may be formed between the four surfaces of the body portion 310 and the inner surface 230 of the exterior material 200 facing each other.

Meanwhile, as shown in FIGS. 3 and 4, the leg portion 320 has a cuboid rod shape, and the leg portion 320 may be formed one at each of the four corners of the body portion 310 having a cuboid box shape. Specifically, FIG. 3 shows a state in which the leg portion 320 formed one at each of the four corners of the body portion 310 is inserted into the exterior material 200, and FIG. 4 shows a state in which one cover member 300 is composed of the body portion 310 and the leg portions 320 formed at each of the four corners of the body portion 310.

At this time, each of the leg portions 320 formed at the four corners of the body portion 310 may be coupled to the inner surface 230 of the exterior material 200 in a thermal fusion manner to seal the internal space 220 of the exterior material 200. At this time, the leg portion 320 and the exterior material 200 may be pressed by the sealing block at a high temperature, or may be thermally fused to each other by simultaneously receiving heat and pressure by the sealing block. The leg portion 320 has a cuboid rod shape, and thus the part of the exterior material 200 facing the flat surface of the leg portion 320 may be pressed by the sealing block. That is, there is no protruding or dug area in the part where the sealing block presses the exterior material 200 and the leg portions 320, and thus the inner surface 230 of the exterior material 200 may be uniformly thermally fused to each of the leg portions 320.

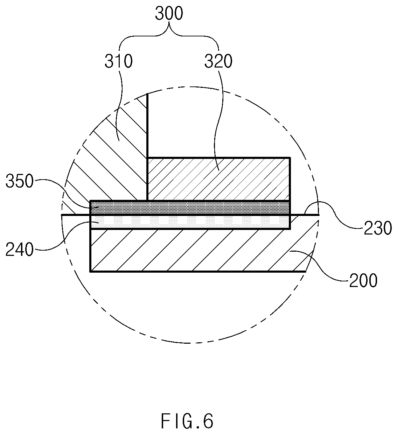

Meanwhile, FIG. 5 is a cross-sectional view taken along the AA' direction of FIG. 3, and FIG. 6 is an enlarged view of part A of FIG. 5. FIGS. 5 and 6 show a state in which the cover member 300 and the inner surface 230 of the exterior material 200 are coupled by thermal fusion. The cover member 300 composed of the body portion 310 and the leg portion 320 may be inserted into the exterior material 200 to be thermally fused with the inner surface 230 of the exterior material 200. At this time, a first thermal fusion surface 240 may be formed on a part of the inner surface 230 of the exterior material 200 that faces the cover member 300, and a second thermal fusion surface 350 thermally fused with the first thermal fusion surface 240 may be formed on the surface of the cover member 300.

The second thermal fusion surface 350 may be formed in various ways on the body portion 310 and the leg portion 320. For example, the second thermal fusion surface 350 may be formed on a surface of a part of the body portion 310 that is inserted into the exterior material 200 and on a surface of an entire part of the leg portion 320.

Meanwhile, the leg portion 320 may be coupled to the inner surface 230 of the exterior material 200 in an adhesive manner. At this time, the leg portion 320 has a cuboid rod shape, and thus a flat adhesive layer may be formed between the flat surface of the leg portion 320 and the inner surface 230 of the exterior material 200 facing each other.

As described above, the leg portion 320 may be formed one at each of the four corners of the body portion 310 having a cuboid box shape and coupled to the inner surface 230 of the exterior material 200 in a fusion or adhesive manner. That is, the leg portions 320 connected to each corner of the body portion 310 are coupled to the inner surface 230 of the exterior material 200, and thus the leg portions 320 may improve the coupling force between the corner portions of the body portion 310 and the exterior material 200, thereby effectively sealing the internal space 220 of the exterior material 200.

Meanwhile, as shown in FIGS. 3 and 4, an electrolyte injection port for injecting an electrolyte into the internal space 220 of the exterior material 200 in which the electrode assembly 100 is accommodated may be formed in the cover member 300. The electrolyte injection port may be a through hole penetrating the body portion 310 of the cover member 300.

An electrolyte injection process for injecting an electrolyte into the internal space 220 may be performed through the electrolyte injection port. For example, the user may inject the electrolyte into the internal space 220 of the exterior material 200 through the electrolyte injection port in a state of disposing the secondary battery 10 so that the body portion 310 in which the electrolyte injection port is formed faces upward.

Additionally, a degassing process for discharging gas generated during activation of the secondary battery 10 to the outside may be performed through the electrolyte injection port. For example, the user may open the electrolyte injection port to induce the discharge of gas in the internal space 220.

After the electrolyte injection process or the degassing process, the electrolyte injection port may be sealed or welded to seal the internal space 220. Additionally, it is also possible to open the electrolyte injection port only when necessary, by installing a valve capable of opening and closing the electrolyte injection port.

On the other hand, the conventional pouch-type secondary battery has a gas pocket formed by rolling up a part of the exterior material, and the gas pocket is removed from the exterior material after capturing the internal gas of the exterior material, so that there is conventionally a problem that a part of the exterior material is repeatedly discarded.

In this regard, the secondary battery 10 according to Embodiment 1 of the present disclosure includes an electrolyte injection port formed in the cover member 300, and the user may inject an electrolyte into the internal space 220 and discharge gas from the internal space 220 to the outside through such an electrolyte injection port, thereby solving the conventional problem that a part of the exterior material is repeatedly discarded.

Meanwhile, as shown in FIGS. 3 to 5, a through hole 330 into which an electrode lead 120 electrically connected to the electrode assembly 100 is inserted may be formed in the cover member 300. The electrode lead 120 is connected to electrode tabs 110 connected to each of the electrode uncoated portions of the electrodes stacked in the electrode assembly 100, and a part of the electrode lead 120 may be exposed to the outside of the secondary battery 10. Here, the through hole 330 may be formed in the body portion 310 of the cover member 300, and the through hole 330 may have a shape corresponding to the shape of the inserted electrode lead 120.

The electrode lead 120 is configured to electrically connect the electrode assembly 100 to another device, and may have various shapes. For example, the electrode lead 120 is provided to penetrate the cover member 300, and may be formed in an I-shape so as not to be easily separated from the cover member 300. Additionally, the electrode tabs 110 may be coupled to one surface of the electrode lead 120.

Additionally, a sealing member such as an O-ring may be interposed between the through hole 330 and the electrode lead 120, or a sealant layer made of a thermoplastic resin may be formed. In this case, it is possible to prevent the electrolyte injected into the internal space 220 from leaking through the through hole 330.

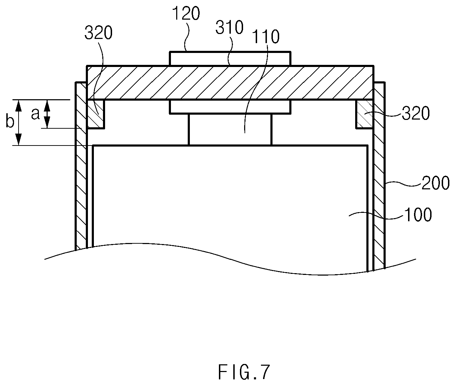

Meanwhile, FIG. 7 is a view for describing a length relationship between the electrode tab 110 and the leg portion 320. Referring to FIG. 7, the leg portion 320 may be provided in a free volume formed within the exterior material 200. Here, the leg portion 320 may be spaced apart from the electrode tab 110 by a predetermined distance. In this case, the leg portion 320 does not interfere with the electrode tab 110 connected to the electrode assembly 100, and thus the electrode tab 110 may be prevented from being damaged by the leg portion 320.

Additionally, the leg portion 320 cannot extend through the electrode assembly 100 inside the exterior material 200, and thus the length (a) by which the leg portion 320 extends from the body portion 310 should be less than or equal to the length (b) of the space between the body portion 310 and the electrode assembly 100. That is, the length (a) by which the leg portion 320 extends cannot be longer than the length (b) of the space between the body portion 310 and the electrode assembly 100, and thus, when the leg portion 320 has a maximum length, the leg portion 320 may extend from the body portion 310 to the electrode assembly 100. At this time, the part where the leg portion 320 and the inner surface 230 of the exterior material 200 are coupled has a maximum length, so that the coupling force between the leg portion 320 and the exterior material 200 may be strengthened, thereby effectively sealing the internal space 220 of the exterior material 200.

### Embodiment 2

A secondary battery according to Embodiment 2 of the present disclosure differs from Embodiment 1 in that it includes a reinforcing member interposed between the body portion and the leg portion to support the leg portion. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

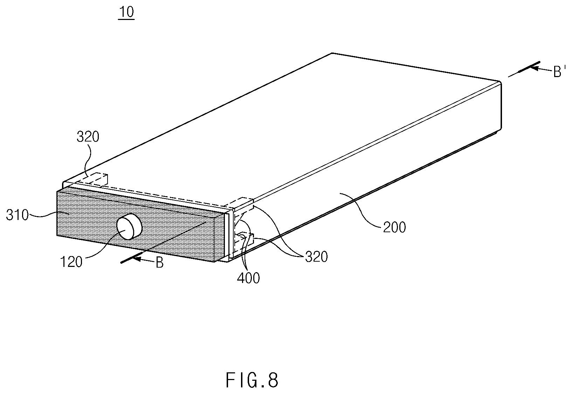

FIG. 8 is a perspective view of a secondary battery 10 according to Embodiment 2 of the present disclosure. Referring to FIG. 8, the secondary battery 10 according to Embodiment 2 of the present disclosure may include a reinforcing member 400 interposed between the body portion 310 and the leg portion 320 to support the leg portion 320. As described above, the sealing block simultaneously presses the exterior material 200 and the cover member 300 to seal the internal space 220, and the reinforcing member 400 may be formed on the opposite side of the pressing part where the sealing block presses the leg portion 320 of the cover member 300.

Therefore, the reinforcing member 400 supports the leg portion 320 while the sealing block presses the leg portion 320, which may prevent the leg portion 320 from being bent or broken toward the internal space 220 of the exterior material 200 during sealing the secondary battery 10.

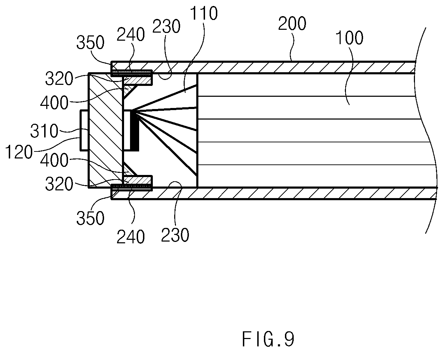

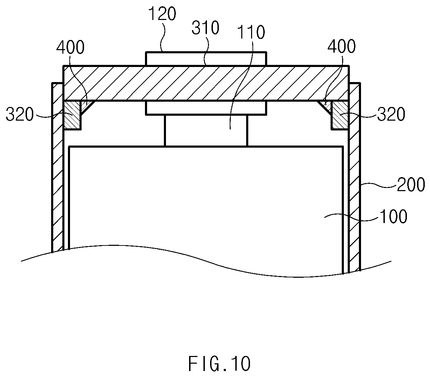

Meanwhile, FIG. 9 is a cross-sectional view taken along the BB' direction of FIG. 8, and FIG. 10 is a view showing a state in which a reinforcing member 400 is installed between a body portion 310 and a leg portion 320. As shown in FIGS. 9 and 10, the reinforcing member 400 may be spaced apart from the electrode assembly 100 and the electrode tab 110 connected to the electrode assembly 100 by a predetermined distance. In this case, the reinforcing member 400 does not interfere with the electrode assembly 100 and the electrode tab 110, and thus the electrode assembly 100 and the electrode tab 110 may be prevented from being damaged by the reinforcing member 400.

The reinforcing member 400 may be made of various materials. For example, the reinforcing member 400 may be obtained from a resin, or may be obtained from a laminate sheet in which a resin layer is formed on both surfaces of a metal layer. In this case, the reinforcing member 400 may be coupled to the body portion 310 and the leg portion 320 in an adhesive or thermal fusion manner. Additionally, the reinforcing member 400 may be made of a metal such as aluminum. In this case, the reinforcing member 400 may be coupled to the body portion 310 and the leg portion 320 in an adhesive manner.

Meanwhile, the body portion 310 may have a cuboid box shape, and the leg portion 320 may have a cuboid rod shape extending from the corner of the body portion 310 toward the internal space 220 of the exterior material 200. Here, the reinforcing member 400 may be interposed at an edge portion formed by the body portion 310 and the leg portion 320. In this case, as shown in FIGS. 8 to 10, the reinforcing member 400 may have a triangular prism shape in contact with the body portion 310 and the leg portion 320 simultaneously.

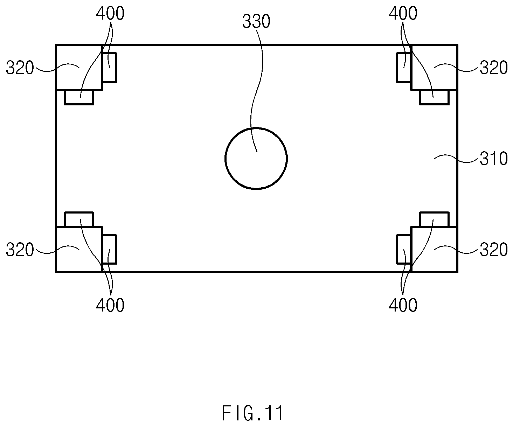

FIG. 11 is a view showing a state in which a reinforcing member 400 is installed at each of parts between a body portion 310 and a leg portion 320. Referring to FIG. 11, the leg portion 320 is installed at every corner of the inner surface of the body portion 310, and the reinforcing member 400 may be installed at every edge formed by the body portion 310 and the leg portion 320. Specifically, the leg portion 320 having a cuboid rod shape may be installed at each of the four corners of the body portion 310 having a cuboid box shape, and the reinforcing member 400 may be installed at each edge formed by the inner surface of the body portion 310 and one surface of the leg portion 320. In this case, each of the plurality of reinforcing members 400 supports the leg portion 320 while the sealing block presses the leg portion 320, which may effectively prevent the leg portion 320 from being bent or broken toward the internal space 220 of the exterior material 200 during sealing the secondary battery 10.

### Embodiment 3

A secondary battery according to Embodiment 3 of the present disclosure differs from Embodiments 1 and 2 in that the thickness of the leg portion is not uniform. The contents common to Embodiments 1 and 2 will be omitted as much as possible, and Embodiment 3 will be described focusing on the differences. That is, it is obvious that contents not described in Embodiment 3 may be regarded as contents of Embodiments 1 and 2 if necessary.

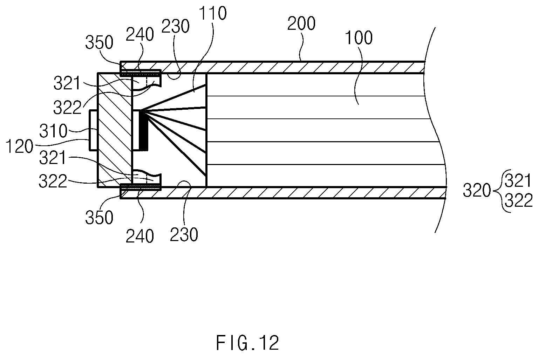

FIG. 12 is a cross-sectional view for describing a leg portion structure in a secondary battery according to Embodiment 3 of the present disclosure.

Referring to FIG. 12, the leg portion 320 may be composed of a first part 321 having a relatively thick thickness and a second part 322 having a relatively thin thickness. This leg portion 320 is manufactured by an injection molding process, and thus the first part 321 and the second part 322 may be integrally connected.

The first part 321 may be located close to a corner portion of the body portion 310, and the second part 322 may be connected to the first part 321 and extend to the internal space 220 of the exterior material 200. Here, the second part 322 may extend toward the internal space 220 until it reaches the electrode assembly 100.

When the leg portion 320 is composed of a relatively thick first part 321 and a relatively thin second part 322, the thick first part 321 is located at a part where stress is concentrated during sealing the secondary battery 10, and thus the leg portion 320 may be prevented from being broken by sealing.

Additionally, the second part 322 where stress is relatively not concentrated during sealing the secondary battery 10 is formed thin, and thus the weight of the secondary battery 10 may be partially reduced, thereby improving the overall energy density of the secondary battery 10 compared to when the entire leg portion 320 is formed thick.

The leg portion 320 may have a streamlined shape. Specifically, a convexly protruding streamlined protrusion may be formed in the first part 321, and a concavely dug streamlined curved portion may be formed in the second part 322.

At this time, the instantaneous rate of change of the part where the protrusion and the curved portion meet is the same, so that no sharp unevenness may be formed at the part where the protrusion and the curved portion meet. In this case, the leg portion 320 has no part where stress is concentrated, and thus, even when the secondary battery 10 is strongly sealed, the leg portion 320 may be prevented from being broken.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

[List of Reference Numerals]

| | | | |
|---|---|---|---|
| 10: | Secondary battery | 100: | Electrode assembly |
| 110: | Electrode tab | 120: | Electrode lead |
| 200: | Exterior material | 200a: | Exterior material sheet |
| 201a: | One end of exterior material sheet | 202a: | The other end of exterior material sheet |
| 210: | Exterior material opening | 220: | Internal space |
| 230: | Inner surface of exterior material | 240: | Sealing surface of exterior material |
| 300: | Cover member | 310: | Body portion |
| 320: | Leg portion | 321: | First part |
| 322: | Second part | 330: | Through hole |
| 350: | Sealing surface of cover member | 400: | Reinforcing member |

## Claims

1. A secondary battery comprising:
an electrode assembly;
a pouch-type exterior material having an internal space that accommodates the electrode assembly and an exterior material opening that allows the internal space to communicate with the outside; and
a cover member inserted into the exterior material opening,
wherein the cover member comprises:
a body portion blocking the exterior material opening; and
a leg portion extending from the body portion toward the internal space,
wherein the body portion and the leg portion are coupled to an inner surface of the exterior material to seal the internal space.

2. The secondary battery according to claim 1,
wherein the leg portion extends from a corner of the body portion toward the internal space.

3. The secondary battery according to claim 1,
wherein the exterior material is formed by rolling or folding an exterior material sheet so that one end and the other end of the exterior material sheet comprising a metal layer and a resin layer formed on both surfaces of the metal layer meet each other.

4. The secondary battery according to claim 3,
wherein the one end and the other end of the exterior material sheet are bonded or fused to each other.

5. The secondary battery according to claim 1,
wherein the body portion and the leg portion are coupled to the inner surface of the exterior material by adhesion or fusion.

6. The secondary battery according to claim 1,
wherein the leg portion extends from the body portion to the electrode assembly.

7. The secondary battery according to claim 2,
wherein the body portion has a cuboid box shape, and
the leg portion has a cuboid rod shape.

8. The secondary battery according to claim 7,
wherein the leg portion is formed at each of four corners of the body portion.

9. The secondary battery according to claim 1,
wherein a through hole into which an electrode lead electrically connected to the electrode assembly is inserted is formed in the cover member.

10. The secondary battery according to claim 1,
wherein an electrolyte injection port for injecting an electrolyte into the internal space of the exterior material in which the electrode assembly is accommodated is formed in the cover member.

11. The secondary battery according to claim 2, further comprising:
a reinforcing member interposed between the body portion and the leg portion to support the leg portion.

12. The secondary battery according to claim 11,
wherein the reinforcing member is spaced apart from the electrode assembly and an electrode tab connected to the electrode assembly by a predetermined distance.

13. The secondary battery according to claim 11,
wherein the reinforcing member is coupled to the body portion and the leg portion by adhesion or fusion.

14. The secondary battery according to claim 11,
wherein the reinforcing member is installed at an edge formed by the body portion and the leg portion.

15. The secondary battery according to claim 2,
wherein the leg portion comprises:
a first part located close to the corner of the body portion and having a relatively thick thickness; and
a second part extending from the first part toward the internal space and having a relatively thin thickness.

16. The secondary battery according to claim 15,
wherein a convexly protruding streamlined protrusion is formed in the first part.

17. The secondary battery according to claim 15,
wherein a concavely dug streamlined curved portion is formed in the second part.
